# EUROPÄISCHE PATENTSCHRIFT

(11) **EP 2 605 689 B1**
(45) Veröffentlichungstag und Bekanntmachung des Hinweises auf die Patenterteilung: **10.12.2014**
(21) Anmeldenummer: 11743059.5
(22) Anmeldetag: 08.08.2011
(51) Int. Cl.: A47J 27/022, B65D 85/72

(54) **BEHÄLTER FÜR NAHRUNGSMITTEL UND VERFAHREN ZUR HERSTELLUNG EINES SOLCHEN BEHÄLTERS**
CONTAINER FOR FOODSTUFFS, AND METHOD FOR PRODUCING SUCH A CONTAINER
RÉCIPIENT POUR DENRÉE ALIMENTAIRE ET PROCÉDÉ DE FABRICATION DUDIT RÉCIPIENT

(30) Priorität: 19.08.2010 FR 1056664
(43) Veröffentlichungstag der Anmeldung: 26.06.2013
(73) Patentinhaber: Rational AG, 86899 Landsberg/Lech (DE); FRIMA International AG, 9435 Heerbrugg (CH)
(72) Erfinder: LINGENHEIL, Markus, 79206 Breisach/Oberrimsingen (DE); WASSMUS, Reinhard, 79395 Neuenburg a. Rhein (DE); BREUNIG, Manfred, 86956 Schongau (DE)
(74) Vertreter: Weber-Bruls, Dorothée
(86) Internationale Anmeldenummer: PCT/EP2011/063639
(87) Internationale Veröffentlichungsnummer: WO 2012/022651

(56) Entgegenhaltungen:
- EP-A1- 1 725 150
- CA-A1- 1 044 478

## Beschreibung

Die vorliegende Erfindung betrifft einen Behälter in Form eines Tiegels eines Gargeräts für die Aufnahme von Speisen und/oder Wärmeübertragungsfluiden in einem Innenraum sowie ein Verfahren zur Herstellung solch eines Behälters.

Schweißverbindungen für Küchengeräte sind im Stand der Technik gut bekannt. Unter dem Begriff "Schweißen" soll im Folgenden das unlösbare Verbinden von Bauteilen unter Anwendung von Wärme oder Druck verstanden werden, mit oder ohne Schweißzusatzwerkstoffen. Unter dem Begriff "Schweißverbindung" sind sämtliche Arten von Schweißverbindungen zu verstehen, beispielsweise Feuerschweißen, Gasschmelzschweißen, Lichtbogenhandschweißen, Schutzgasschweißen, Widerstandsschweißen, Kaltpressschweißen, Reibschweißen, Unterpulverschweißen, Laserstrahlschweißen, Elektronenstrahlschweißen, oder dergleichen.

Böden von Behältern zur Aufnahme von Speisen und/oder zur Aufnahme eines Wärmeübertragungsfluids, im Folgenden Tiegel genannt, werden im Stand der Technik häufig mit einer höheren Materialstärke ausgeführt als die Seitenwände des Behälters. Üblicherweise wird dabei ein Tiegelboden in Sandwich- oder Mehrschicht-Bauweise ausgeführt. Dabei weist der Bereich des Tiegelbodens mit der im Vergleich zu den Seitenwänden höheren Materialstärke eine höhere Wärmespeicherkapazität als die Seitenwände des Tiegels auf. Auch kann es vorgesehen sein, Heizelemente direkt in den Tiegelboden zu integrieren, beispielsweise in Form einer mittleren Schicht eines drei-schichtigen Sandwichaufbaus eines Tiegelbodens.

Ein aus der EP 1 725 150 B1 bekannter Tiegelboden ist in Figur 1 dargestellt. In Figur 1 ist genauer gesagt ein Ausschnitt eines Tiegels 1 in einer Seitenansicht im Schnitt gezeigt, umfassend Seitenwände 3, 5, die an ihren Enden zumindest bereichsweise gebogen sind. Die Seitenwände 3, 5 sind dabei durch Tiefziehen eines Grundkörpers und Herausschneiden eines Bodenbereichs zur Freilassung einer Bodenöffnung 6 hergestellt worden. Ein im Schnitt rechteckiges Bodenelement 7 des Tiegels 1 mit einer hohen Materialstärke ist zwischen den beiden Seitenwänden 3, 5 angeordnet und beispielhaft in Mehrschichtbauweise ausgeführt. Eine erste oberste Schicht 9 aus einem vorzugsweise hoch wärmeleitfähigen Material ist dabei über einer mit einer höheren Materialstärke ausgeführten zweite Schicht 11 angeordnet, an die sich unten eine dritte Schicht 13 anschließt. Das Bodenelement 7 weist insgesamt eine höhere Energiespeicherkapazität als die Seitenwände 3, 5 auf. Dabei wird Energie, insbesondere in Form von Wärme, von einer nicht gezeigten Energiequelle, beispielsweise einer elektrischen Heizung, einer Gasheizung, oder dergleichen, von der dritten Schicht 13 über die zweite Schicht 11 auf die erste Schicht 9 übertragen, so dass sich im Tiegel 1 befindliche Objekte, insbesondere Nahrungsmittel, Fluide, oder dergleichen, erhitzt werden. Die Verbindung zwischen den Seitenwänden 3, 5 und dem Bodenelement 7 ist eine Schweißverbindung.

Nachteilig an der aus dem Stand der Technik bekannten Verbindung der Seitenwände und des Bodenelements des Tiegels ist, dass aufgrund der unterschiedlichen Materialstärken der miteinander zu verschweißenden Teile hohe thermische Spannungen auf die Schweißverbindung wirken. Dies führt zu einer hohen Belastung der Schweißverbindung, die zusätzlich zu mechanischen Belastungen, beispielsweise durch eine Beladung des Tiegels mit einem Gargut, wirkt.

Bei dem konkreten Ausführungsbeispiel der EP 1 725 150 B1 ist das Bodenelement 7 relativ zur Öffnung 6 derart dimensioniert, dass die Seitenwände 3, 5 das Bodenelement 7 teilweise überlappen und die Schweißverbindung 15, 15' vom Inneren des Tiegels aus erfolgen muss, was nicht nur Nachteile hinsichtlich der Belastbarkeit der Schweißverbindung mit sich bringt, sondern zudem vom ästhetischen Standpunkt sowie auch hinsichtlich der Reinigbarkeit Nachteile mit sich bringt.

Die CA 1 044 478 A1 offenbart einen Tiegel, bei dem Seitenwände in einem gebogenen Übergangsbereich mit einer Titanschicht verschweißt sind, die ihrerseits von einer Kohlestoffstahlschicht getragen wird, an der auf der der Titanschicht abgewandten Seite elektrische Elemente angebracht sind, wobei zudem eine Umkleidung aus rostfreiem Stahl sich von den Seitenwänden, benachbart zu der Schweißverbindung, längs der Kohlenstoffstahlschicht erstreckt. Dieser Aufbau weist aufgrund unterschiedlicher Materialstärken der miteinander verschweißten Teile hohe thermische Spannungen auf, und die Schweißverbindung ist wiederum vom Inneren des Tiegels aus herzustellen, so dass die gleichen Nachteile vorliegen, wie sie bereits im Zusammenhang mit der EP 1 725 150 B1 beschrieben sind.

Aus der EP 2 190 259 A1 ist die Kombination der positiven Eigenschaften eines Mehrschichtmaterials für ein Bodenelement eines Tiegels einerseits mit denen einer Dickschichtheizung des Tiegels andererseits zu einer optimalen Energieausnutzung bei gleichzeitig einfachem Aufbau bekannt. Dabei sorgt die Kombination aus einem aufzuheizenden Bodenelement und einer direkt darauf aufgebrachten Heizung sowohl für ein schnelles Aufheizen sowie auch schnelles Abkühlen, was für ein exaktes Führen einer Vielzahl von Garverfahren notwendig ist, um reproduzierbare und qualitative hochwertige Garergebnisse zu erhalten.

Der Einsatz von Heizschichten auf der Basis von Kohlenstoffnanotubes in Gargeräten ist beispielsweise aus der DE 10 2009 029 464 A1 bekannt.

Die EP 2 268 101 A1 offenbart einen Tiegelboden mit unterschiedlich dimensionierten Heizzonen, die individuell ansteuerbar sind.

Aufgabe der vorliegenden Erfindung ist es, einen Behälter in Form eines Tiegels eines Gargeräts für die Aufnahme von Speisen und/oder Wärmeübertragungsfluiden in einem Innenraum zu liefern, der die Nachteile des Stands der Technik überwindet. Der Behälter soll eine sichere Schweißverbindung zwischen seinen Seitenwänden und seinem Bodenelement aufweisen.

Diese Aufgabe wird erfindungsgemäß gelöst durch einen Behälter in Form eines Tiegels eines Gargeräts für die Aufnahme von Speisen und/oder Wärmeübertragungsfluiden in einem Innenraum, der begrenzt ist von zumindest einer Seitenwand der Materialstärke b und wenigstens einem Bodenelement, wobei das Bodenelement in einem Randbereich des Behälters mittels zumindest einer Schweißverbindung unlösbar mit der Seitenwand verbunden ist, außerhalb des Randbereichs eine Materialstärke a mit a > b aufweist und im Bereich der Verbindung mit der Seitenwand eine Materialstärke b' aufweist, die im Wesentlichen der Materialstärke b der Seitenwand entspricht.

Dabei ist bevorzugt, dass das Bodenelement mindestens zwei Schichten umfasst, wobei die oberste, dem Innenraum des Behälters zugewandte Schicht sich in den Bereich der Verbindung erstreckt, während jede weitere Schicht sich nicht bis zur Verbindung erstreckt, und/oder das Bodenelement eine Aussparung in dem Randbereich zur Anpassung der Materialstärke a des Bodenelements außerhalb des Randbereichs an die Materialstärke b' im Bereich der Verbindung aufweist.

Dabei wiederum bevorzugt ist, dass die oberste Schicht eine Materialstärke aufweist, die im Wesentlichen der der Seitenwand entspricht, und/oder die Aussparung zur Bereitstellung einer Bodenelementabschrägung zumindest teilweise angeschrägt ist, vorzugsweise zwischen zwei Radiusübergängen.

Es wird auch vorgeschlagen, dass die oberste Schicht mit einer Materialstärke b', die im Wesentlichen der Materialstärke b der Seitenwand entspricht, über eine Länge b" alleine das Bodenelement bildet, wobei vorzugsweise b' = b".

Ferner kann vorgesehen sein, dass der Winkel α zwischen der Bodenelementabschrägung und der von dem Innenraum des Behälters abgewandten Unterseite der obersten Schicht > 90°, vorzugsweise > 120°, am bevorzugtesten > 140° und < 160°, ist.

Bevorzugt ist, dass das Seitenelement im Randbereich gebogen ist, wobei ein Radiusübergang des Seitenelements sich vorzugsweise bis zur Verbindung erstreckt.

Es wird auch vorgeschlagen, dass die Verbindung eine Schweißverbindung umfasst, wobei vorzugsweise die Schweißverbindung, die insbesondere ohne Schweißzusatzwerkstoff erzeugbar ist, eine Schweißnaht, insbesondere mit einer im Schnitt flachen Mantelkegelfläche, darstellt und/oder auf der dem Innenraum abgewandten Seite des Behälters angeordnet ist.

Zudem kann vorgesehen sein, dass das Bodenelement drei Schichten und/oder zumindest wenigstens ein Heizelement oder einen Bestandteil einer Induktionsheizung umfasst.

Dabei kann wiederum vorgesehen sein, dass die oberste Schicht eine Edelstahlschicht ist, auf deren dem Innenraum abgewandten Unterseite eine Schicht aus Stahl aufgebracht ist, während auf der dem Innenraum abgewandten Unterseite der Stahlschicht eine Chromstahlschicht aufgebracht ist.

Weiters wird vorgeschlagen, dass die Wärmeleitfähigkeit des Bodenelements von dem Innenraum nach unten größer wird und/oder die Längenausdehnungsfähigkeit des Bodenelements von der obersten Schicht von dem Innenraum nach unten kleiner wird.

Zudem kann vorgesehen sein, dass auf der dem Innenraum des Behälters abgewandten Seite des Bodenelements zumindest ein Heizelement, angebracht ist, wobei vorzugsweise das Heizelement ein Dickschichtheizelement, ein Induktionsheizelement oder ein Heizelement mit zumindest einer Schicht mit Kohlenstoffnanotube-Bestandteilen umfasst.

Die Erfindung liefert auch ein Verfahren zur Herstellung eines erfindungsgemäßen Behälters, wobei jede Seitenwand durch Tiefziehen und/oder Biegen erzeugt wird, in den Bodenbereich eine Öffnung eingebracht wird, insbesondere durch Schneiden, Fräsen oder Lasern, die Öffnung von dem Bodenelement überdeckt wird, und das Bodenelement mit der Seitenwand, insbesondere im gebogenen Randbereich, unlösbar durch Schweißen verbunden wird.

Ferner wird vorgeschlagen, die Schweißverbindung in einem, von der dem Innenraum des Behälters abgewandten, unteren Seite, insbesondere über Material des Bodenelements, hergestellt wird.

Zudem wird auch vorgeschlagen, dass die Aussparung und/oder die Schweißverbindung poliert wird bzw. werden.

Bevorzugt ist, dass auf zumindest einen Teil des Bodenelements, vorzugsweise auf zumindest einen Teil des Bodenelements und der Bodenelementabschrägung und/oder des Randbereichs der Seitenwand, eine Heizbeschichtung auf Basis von Kohlenstoffnanotubes aufgebracht wird.

Dabei kann vorgesehen sein, dass die Heizbeschichtung mit einer Niederspannungsquelle, insbesondere einem 12V/24V-Netz, verbunden wird.

Schließlich ist es noch bevorzugt, dass die Heizbeschichtung zur Bereitstellung von, insbesondere getrennt ansteuerbaren, Heizzonen, vorzugsweise durch Freilassen von Spalten und/oder Zeilen, aufgedruckt wird.

Der Erfindung liegt somit die überraschende Erkenntnis zugrunde, dass die Verbindung eines, insbesondere mehrschichtigen, Bodenelements eines Tiegels, das in wesentlichen Bereichen eine höhere Materialstärke als die Seitenwände des Tiegels aufweist, durch eine Reduzierung der Materialstärke des Bodenelements im Bereich der Verbindung, vorzugsweise auf ungefähr die Materialstärke der Seitenwände, erheblich verbessert werden kann. Bei einem Mehrschicht-Bodenelement, beispielsweise in Sandwich-Bausweise, hat es sich dabei als besonders vorteilhaft herausgestellt, wenn eine oberste Schicht des Bodenelements, die dem Innenraum des Tiegels zugewandt ist, nahezu die Materialstärke der Seitenwände aufweist, wenigstens bereichsweise in der Nähe der Verbindung zu den Seitenwänden, und die weiteren Schichten in ihrer Längssowie Quererstreckung kleiner als die erste Schicht sind.

Der Aufbau des Bodenelements des Tiegels ist dabei nicht beschränkend auf eine Sandwich-Bauweise zu verstehen. Neben der klassischen Sandwich-Bauweise mit zwei gutwärmeleitfähigen Schichten und einer sich dazwischen befindlichen hoch-wärmeleitfähigen Schicht können selbstverständlich beliebig viele Schichten, je nach Bedarf, zum Einsatz kommen. Insbesondere kann auch vorgesehen sein, Funktionselemente in das Bodenelement des Tiegels zu integrieren, beispielsweise Heizelemente, Kühlelemente oder dergleichen.

Als besonders vorteilhaft für Tiegel hat sich die Verwendung einer Heizbeschichtung auf der Basis von Kohlenstoffnanotubes herausgestellt, insbesondere da sie einfach aufbringbar ist, eine Beheizung von beliebig geformten Oberflächengeometrien ermöglicht, eine hohe Sicherheit durch eine Niederspannungsversorgung gewährleistet, eine gleichmäßige Erwärmung großer Flächen sicherstellt, einfache Anschließmöglichkeiten sowie einfache Ansteuermöglichkeiten bietet. Diese Vorteile ermöglichen bei einem erfindungsgemäßen Tiegel die gezielte Bedruckung dessen Bodenbereichs, insbesondere dessen Bodenelements, Randbereichs sowie selbst dessen Seitenwand, mit einer Heizbeschichtung, was eine Optimierung des Wärmeeintrags in den Tiegel ermöglicht. Eine weitere Optimierung ist dadurch gegeben, dass über eine entsprechende Heizbeschichtung Heizzonen, die individuell angesteuert werden können, bereitgestellt werden können, nämlich durch das gezielte Aussparen von Zeilen und/oder Spalten bei der Beschichtung.

Ferner hat es sich als besonders vorteilhaft erwiesen, wenn wesentliche Elemente des Tiegels zuerst tiefgezogen werden. Alternativ kann vorgesehen sein, dass die Elemente des Tiegels, insbesondere die Seitenwände, mittels Biegen in die gewünscht Form gebracht werden. Aufgrund der hohen Materialstärke des Bodenelements ist ein nachträgliches Integrieren besagten Bodenelements in einen Grundkörper des Tiegels notwendig. Dafür kann das tiefgezogene Tiegelelement nachträglich mit einer entsprechenden Öffnung versehen werden, oder es kann vorgesehen sein, dass die gebogenen Seitenwände passgenau hergestellt werden.

Sofern das Bodenelement aus mehr als einer Schicht besteht und die oberste Schicht ungefähr die Materialstärke der Seitenwände des Tiegels aufweist, können die weiteren Schichten entweder direkt mit jeweils kleineren Ausmaßen als die oberste Schicht in Richtung der Seitenwände auf die Unterseite der obersten Schicht angebracht werden, um die gewünschten Übergänge zu den Seitenwänden zu ermöglichen, oder es können Aussparungen nach Abschluss der Herstellung des Bodenelements als solches vorgesehen werden. Dies lässt sich beispielsweise durch ein Fräsen der gewünschten Aussparungen erreichen. Entscheidend ist dabei, dass die Aussparungen derart zu dimensionieren sind, dass unerwünschte thermische Belastungen durch unterschiedliche Ausdehnungen des Bodenelements und der Seitenwände im Bereich deren Verbindung signifikant verringert werden, insbesondere unterschiedliche Ausdehnungen, die aus verschiedenen Wärmespeicherkapazitäten des Bodenelements und der Seitenwände des Tiegels resultieren.

Das Bodenelement reicht vorzugsweise direkt bis an einen Biegeradius jeder Seitenwand heran, und ist im kompletten Randbereich des Tiegels mit Radienübergängen angeschrägt, um eine optimale Spannungsverteilung hervorzurufen, bei gleichzeitig möglichst geringen, nicht direkt über das Bodenelement aufheizbaren Randbereichen.
Die Verbindung des Bodenelements und der Seitenwände des Tiegels wird mittels einer Schweißverbindung realisiert. Dabei ist es besonders bevorzugt, wenn das Schweißen ohne weiteren Zusatz und von unten, also von der dem Innenraum des Tiegels abgewandten Seite erfolgt, wobei sich eine Schweißnaht in einem großen Radiusbogen führen lässt, so dass eine im Schnitt flache Mantelkegelfläche entsteht, die eine optimale, gleichmäßige Spannungsverteilung im Material erreichen lässt. Besonders vorteilhaft ist dabei die Verbindung eines MAG-Schweißens.

Ein Einsatz eines erfindungsgemäßen Tiegels erfolgt bevorzugt in einem Gargerät, insbesondere in einem von der Anmelderin unter den Handelsnamen VarioCooking Center® vertriebenen Gargerät.

Weitere Merkmale und Vorteile der Erfindung ergeben sich aus der nachfolgenden Beschreibung, in der Ausführungsbeispiele der Erfindung anhand schematischer Zeichnungen im Einzelnen beispielhaft erläutert sind. Dabei zeigt:
Figur 1 eine Schnittansicht eines Bereichs eines bekannten Tiegels;
Figur 2 eine Schnittansicht eines Bereichs eines erfindungsgemäßen Tiegels, und
Figur 3 eine Schnittansicht eines Bereichs eines weiteren erfindungsgemäßen Tiegels.

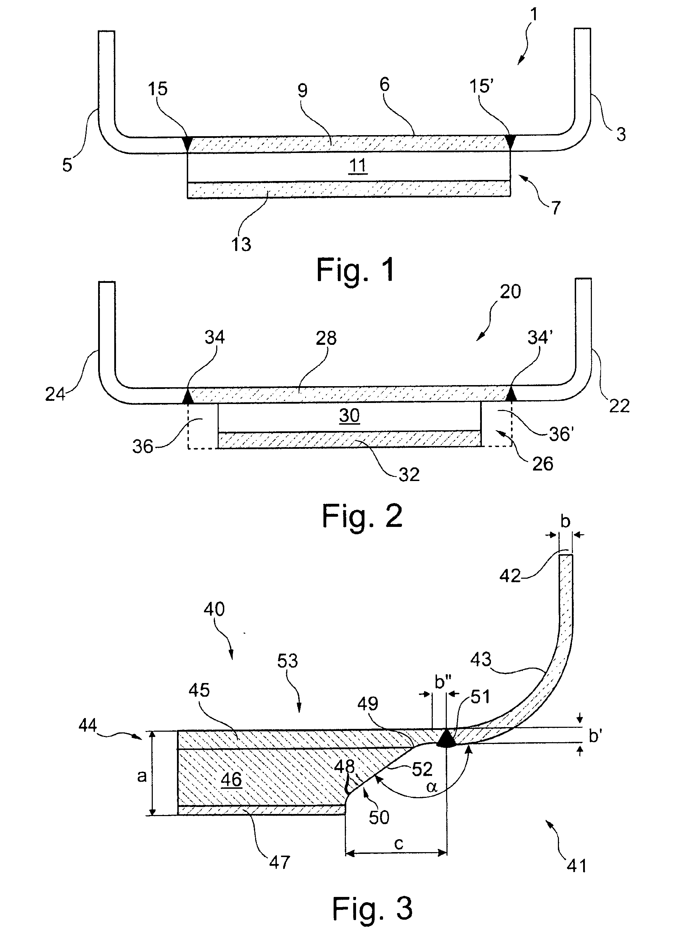

Ein erfindungsgemäßer Tiegel 20 umfasst vier Seitenwände, von denen zwei Seitenwände 22, 24 in Figur 2 gezeigt sind. Die Seitenwände 22, 24 sind jeweils an einem Ende zumindest bereichsweise gebogen. Ein Bodenelement 26 ist zudem in dem Tiegel 20 vorgesehen und umfasst eine erste Schicht 28, eine zweite Schicht 30 und eine dritte Schicht 32. Die erste Schicht 28 weist dabei nahezu die Materialstärke der Seitenwände 22, 24 des Tiegels 20 auf, während die Materialstärke des Bodenelements 26 in wesentlichen Bereichen deutlich größer als die Materialstärke der Seitenwände 22, 24 ist. Dies wird durch die Anordnung bzw. Erstreckung der zweiten und dritten Schicht 30, 32 realisiert, die in ihren Ausmaßen zwischen den Seitenwänden 22, 24 zumindest bereichsweise kleiner als die der ersten Schicht 28 sind. Dadurch wird sichergestellt, dass die Materialstärke des Bodenelements 26 im Bereich von Verbindungen 34, 34' mit den Seitenwänden 22, 24 ungefähr der Materialstärke der Seitenwände 22, 24 selbst entspricht. Bei den Verbindungen 34, 34' handelt es sich bevorzugt um Schweißverbindungen.

Ein solcher Aufbau des Bodenelements 26 lässt sich auf unterschiedliche Arten realisieren. Bevorzugt ist dabei, nach Herstellung des Bodenelements 26 aus mehreren Schichten bestimmte Bereiche zu entfernen, so dass also Aussparungen 36, 36' entstehen. Alternativ kann vorgesehen sein, dass die zweite und dritte Schicht 30, 32 bereits vor dem Zusammenführen mit der ersten Schicht 28 auf die gewünschten Maße reduziert ausgeformt werden, so dass die gewünschte geometrische Ausformung bereitgestellt werden kann.

Vorteilhaft an einem Bodenelement 26 eines erfindungsgemäßen Tiegels 20 ist also, dass die Materialstärke des Bodenelements 26 und die der Seitenwände 22, 24 im Bereich der Verbindungsstellen 34, 34' nahezu identisch sind. Dies führt dazu, dass Belastungen, die auf die Verbindung der Seitenelemente 22, 24 und des Bodenelements 26 wirken, deutlich reduziert werden können. Dies betrifft insbesondere die Belastung von Schweißverbindungen, die ansonsten aufgrund von unterschiedlichen Materialstärken unter hohen thermischen Belastungen durch unterschiedliche Materialverformungen bei Temperaturschwankungen, wie bei Garverfahren üblich, hohen zusätzlichen Belastungen ausgesetzt sind.

Die Geometrie der Aussparungen 36, 36' kann optimiert werden, und zwar sowohl hinsichtlich der Spannungsverteilung, der Optik sowie auch der Reinigbarkeit. Hierzu wird im Anschluss Bezug auf Figur 3 genommen. Dort ist ein Tiegel 40 mit einem Randbereich 41 dargestellt, in dem sich Seitenwände 42 mit einem Seitenwandradius 43 mit einem im Wesentlichen ebenen Bodenelement 44 treffen. Mit anderen Worten reicht das Bodenelement 44 bis zum Bereich des Seitenradius 43 jeder Seitenwand 42. Das Bodenelement 44 weist drei Schichten 45, 46, 47 auf. Dabei kann es sich bei der obersten, dem Innenraum des Tiegels 40 zugewandten Schicht 45 um eine Edelstahlschicht, bei der darunter angeordneten Schicht 46 um eine Stahlschicht und bei der untersten Schicht 47 um eine Chromstahlschicht handeln. Das Bodenelement 44 ist so hergestellt, dass der Randbereich 41 mit Radienübergängen 48, 49 angeschrägt ist, um die eigentliche Materialstärke a des Bodenelements 44 bis auf die Materialstärke b' zu reduzieren, die im Wesentlichen der Materialstärke b der Seitenwand 42 entspricht. Zudem ist die oberste Schicht 45 des Bodenelements 44 so geführt, dass sie sich über eine Länge b", die im Wesentlichen der Materialstärke b' entspricht, alleine, also ohne die beiden anderen Schichten 46, 47 des Bodenelements 44 erstreckt, um so eine optimierte Schweißverbindung 51 herstellen zu können. Die Länge c der Aussparung 50 entspricht zudem ungefähr der Materialstärke a des Bodenelements 44 plus der Materialstärke b der Seitenwand 42, während der Winkel α zwischen der Schräge des Bodenelements 44, also der Bodenelementabschrägung 52 zwischen den Radiusübergängen 48, 49, bis zur Unterseite der obersten Schicht 45 circa 145° C beträgt.

Die Seitenwand 42 ist mit der obersten Schicht 41 von unten verschweißt, und zwar zum Verschließen einer Öffnung 53 ohne weiteren Zusatz, wobei sich die Schweißnaht insbesondere in den kritischen Tiegelecken in einem großen Radiusbogen führen lässt, wodurch sich durch die sich ergebende flache Mantelkegelfläche eine optimale, gleichmäßige Spannungsverteilung im Material erreichen lässt. Sowohl die Schweißverbindung 51 als auch die Aussparung 50 sind zudem bevorzugt poliert, um Kerbwirkungen zu reduzieren. Schließlich kann auf die unterste Schicht 47, und zwar auf deren Unterseite, noch eine Vielzahl von Heizelementen aufgebracht werden, beispielsweise wie aus der EP 2 190 259 A1 bekannt. Es kann aber auch eine Heizbeschichtung auf der Basis von Kohlenstoffnanotubes zur Bereitstellung einer Vielzahl von einzeln ansteuerbaren Heizzonen aufgedruckt werden.

Die in der voranstehenden Beschreibung, den Zeichnungen sowie den Ansprüchen offenbarten Merkmale der Erfindung können sowohl einzeln als auch in Kombination für die Verwirklichung der Erfindung in ihren Ausführungsformen wesentlich sein.

### Bezugszeichenliste

- 1: Tiegel
- 3, 5: Seitenwand
- 6: Öffnung
- 7: Bodenelement
- 9, 11, 13: Schicht
- 15, 15': Schweißverbindung
- 20: Tiegel
- 22, 24: Seitenwand
- 26: Bodenelement
- 28, 30, 32: Schicht
- 34, 34': Schweißverbindung
- 36, 36': Aussparung
- 40: Tiegel
- 41: Randbereich
- 42: Seitenwand
- 43: Seitenwandradius
- 44: Bodenelement
- 45, 46, 47: Schicht
- 48, 49: Radienübergang
- 50: Aussparung
- 51: Schweißverbindung
- 52: Bodenelementabschrägung
- 53: Öffnung
- a, b, b': Materialstärke
- b": Länge
- c: Länge
- α: Winkel

## Patentansprüche

1. Behälter (20, 40) in Form eines Tiegels eines Gargeräts für die Aufnahme von Speisen und/oder Wärmeübertragungsfluiden in einem Innenraum, der begrenzt ist von zumindest einer Seitenwand (22, 24, 42) der Materialstärke b und wenigstens einem Bodenelement (26, 44), wobei
das Bodenelement (26, 44) in einem Randbereich (41) des Behälters (20, 40) mittels zumindest einer Schweißverbindung (34, 34', 51) unlösbar mit der Seitenwand (22, 24, 42) verbunden ist, außerhalb des Randbereichs (41) eine Materialstärke a mit a > b aufweist und dadurch gekenzeichnet, dass das Bodenelement (26,44) im Bereich der Verbindung (34, 34', 51) mit der Seitenwand (22, 24, 42) eine Materialstärke b' aufweist, die im Wesentlichen der Materialstärke b der Seitenwand (22, 24, 42) entspricht.

2. Behälter nach Anspruch 1, **dadurch gekennzeichnet, dass**
das Bodenelement (26, 44) mindestens zwei Schichten (28, 30, 32, 45, 46, 47) umfasst, wobei die oberste, dem Innenraum des Behälters (20, 40) zugewandte Schicht (28, 45) sich in den Bereich der Verbindung (34, 34', 51) erstreckt, während jede weitere Schicht (30, 32, 46, 47) sich nicht bis zur Verbindung (34, 34', 51) erstreckt, und/oder das Bodenelement (26, 44) eine Aussparung (36, 36', 50) in dem Randbereich (41) zur Anpassung der Materialstärke a des Bodenelements (26, 44) außerhalb des Randbereichs an die Materialstärke b' im Bereich der Verbindung (34, 34', 51) aufweist.

3. Behälter nach Anspruch 2, **dadurch gekennzeichnet, dass**
die oberste Schicht (28) eine Materialstärke aufweist, die im Wesentlichen der der Seitenwand (22, 24) entspricht, und/oder
die Aussparung (50) zur Bereitstellung einer Bodenelementabschrägung (52) zumindest teilweise angeschrägt ist, vorzugsweise zwischen zwei Radiusübergängen (48, 49).

4. Behälter nach Anspruch 2 oder 3, **dadurch gekennzeichnet, dass** die oberste Schicht (45) mit einer Materialstärke b', die im Wesentlichen der Materialstärke b der Seitenwand (42) entspricht, über eine Länge b" alleine das Bodenelement (26, 44) bildet, wobei vorzugsweise b' = b".

5. Behälter nach Anspruch 3 oder 4, **dadurch gekennzeichnet, dass** der Winkel α zwischen der Bodenelementabschrägung (52) und der von dem Innenraum des Behälters (20, 40) abgewandten Unterseite der obersten Schicht (45) > 90°, vorzugsweise > 120°, am bevorzugtesten > 140° und < 160°, ist.

6. Behälter nach einem der vorangehenden Ansprüche, **dadurch gekennzeichnet, dass** das Seitenelement (42) im Randbereich (41) gebogen ist, wobei ein Radiusübergang (43) des Seitenelements (42) sich vorzugsweise bis zur Verbindung (51) erstreckt.

7. Behälter nach einem der vorangehenden Ansprüche, **dadurch gekennzeichnet, dass** die Schweißverbindung, die insbesondere ohne Schweißzusatzwerkstoff erzeugbar ist, eine Schweißnaht, insbesondere mit einer im Schnitt flachen Mantelkegelfläche, darstellt und/oder auf der dem Innenraum abgewandten Seite des Behälters (20, 40) angeordnet ist.

8. Behälter nach einem der vorangehenden Ansprüche, **dadurch gekennzeichnet, dass** das Bodenelement (26, 44) drei Schichten (28, 30, 32, 45, 46, 47) und/oder zumindest wenigstens ein Heizelement oder einen Bestandteil einer Induktionsheizung umfasst.

9. Behälter nach Anspruch 8, **dadurch gekennzeichnet, dass** die oberste Schicht (45) eine Edelstahlschicht ist, auf deren dem Innenraum abgewandten Unterseite eine Schicht (46) aus Stahl aufgebracht ist, während auf der dem Innenraum abgewandten Unterseite der Stahlschicht (46) eine Chromstahlschicht (47) aufgebracht ist.

10. Behälter nach einem der vorangehenden Ansprüche, **dadurch gekennzeichnet, dass** die Wärmeleitfähigkeit des Bodenelements (26, 44) von dem Innenraum nach unten größer wird und/oder die Längenausdehnungsfähigkeit des Bodenelements (26, 44) von der obersten Schicht (28, 45) von dem Innenraum nach unten kleiner wird.

11. Behälter nach einem der vorangehenden Ansprüche, **dadurch gekennzeichnet, dass** auf der dem Innenraum des Behälters abgewandten Seite des Bodenelements zumindest ein Heizelement, angebracht ist, wobei vorzugsweise das Heizelement ein Dickschichtheizelement, ein Induktionsheizelement oder ein Heizelement mit zumindest einer Schicht mit Kohlenstoffnanotube-Bestandteilen umfasst.

12. Verfahren zur Herstellung eines Behälters nach einem der vorangehenden Ansprüche,
**dadurch gekennzeichnet, dass**
jede Seitenwand (22, 24, 42) durch Tiefziehen und/oder Biegen erzeugt wird,
in den Bodenbereich eine Öffnung (53) eingebracht wird, insbesondere durch Schneiden, Fräsen oder Lasern, die Öffnung (53) von dem Bodenelement (26, 44) überdeckt wird, und
das Bodenelement (26, 44) mit der Seitenwand (22, 24, 42), insbesondere in einem gebogenen Randbereich (41), unlösbar durch Schweißen verbunden wird.

13. Verfahren nach Anspruch 12, **dadurch gekennzeichnet, dass** die Schweißverbindung (34, 34', 51) in einem, von der dem Innenraum des Behälters (20, 40) abgewandten, unteren Seite, insbesondere über Material des Bodenelements (26, 44), hergestellt wird.

14. Verfahren nach Anspruch 12 oder 13, **dadurch gekennzeichnet, dass** die Aussparung (50) und/oder die Schweißverbindung (34, 34', 51) poliert wird bzw. werden.

15. Verfahren nach einem der Ansprüche 12 bis 14, **dadurch gekennzeichnet, dass** auf zumindest einen Teil des Bodenelements (26, 44), vorzugsweise auf zumindest einen Teil des Bodenelements (26, 44) und der Bodenelementabschrägung (52) und/oder dem Randbereich (41) der Seitenwand (42), eine Heizbeschichtung auf Basis von Kohlenstoffnanotubes aufgebracht wird.

16. Verfahren nach Anspruch 15, **dadurch gekennzeichnet, dass** die Heizbeschichtung mit einer Niederspannungsquelle, insbesondere einem 12V/24V-Netz, verbunden wird.

17. Verfahren nach Anspruch 15 oder 16, **dadurch gekennzeichnet, dass** die Heizbeschichtung zur Bereitstellung von, insbesondere getrennt ansteuerbaren, Heizzonen, vorzugsweise durch Freilassen von Spalten und/oder Zeilen, aufgedruckt wird.

## Claims

1. A container (20, 40) in the form of a crucible of a cooking appliance for accommodating foodstuffs and/or heat-transfer fluids in an interior which is defined by at least one side wall (22, 24, 42) of material thickness b and at least one base element (26, 44), wherein
the base element (26, 44) is non-detachably joined to the side wall (22, 24, 42) in an edge region (41) of the container (20, 40) by means of at least one welded join (34, 34', 51) and has outside the edge region (41) a material thickness a, where a > b, **characterized in that** the base element (26, 44) has in the region of the join (34, 34', 51) to the side wall (22, 24, 42) a material thickness b' which substantially corresponds to the material thickness b of the side wall (22, 24, 42).

2. The container according to claim 1, **characterized in that**
the base element (26, 44) comprises at least two layers (28, 30, 32, 45, 46, 47), wherein the uppermost layer (28, 45) facing towards the interior of the container (20, 40) extends into the region of the join (34, 34', 51), while each further layer (30, 32, 46, 47) does not extend as far as the join (34, 34', 51), and/or
the base element (26, 44) has a clearance (36, 36', 50) in the edge region (41) in order to adapt the material thickness a of the base element (26, 44) outside the edge region to the material thickness b' in the region of the join (34, 34', 51).

3. The container according to claim 2, **characterized in that**
the uppermost layer (28) has a material thickness which substantially corresponds to that of the side wall (22, 24), and/or
the clearance (50) is at least partially tapered, preferably between two radius transitions (48, 49), in order to provide a base element taper (52).

4. The container according to claim 2 or 3, **characterized in that**
the uppermost layer (45), having a material thickness b' which substantially corresponds to the material thickness b of the side wall (42), forms on its own over a length b" the base element (26, 44), wherein preferably b' = b".

5. The container according to claim 3 or 4, **characterized in that**
the angle α between the base element taper (52) and the underside of the uppermost layer (45), which underside faces away from the interior of the container (20, 40), is > 90°, preferably > 120°, most preferably > 140° and < 160°.

6. The container according to any of the preceding claims, **characterized in that**
the side element (42) is curved in the edge region (41), wherein a radius transition (43) of the side element (42) preferably extends as far as the join (51).

7. The container according to any of the preceding claims, **characterized in that**
the welded join, which in particular can be produced without adding welding material, is a weld seam, in particular having a conical lateral surface that is flat when seen in cross-section, and/or is arranged on the side of the container (20, 40) facing away from the interior.

8. The container according to any of the preceding claims, **characterized in that** the base element (26, 44) comprises three layers (28, 30, 32, 45, 46, 47) and/or comprises at least one heating element or part of an induction heating system.

9. The container according to claim 8, **characterized in that**
the uppermost layer (45) is a stainless steel layer, to which a layer (46) of steel is applied on the underside thereof facing away from the interior, while a chrome steel layer (47) is applied to the underside of the steel layer (46) facing away from the interior.

10. The container according to any of the preceding claims, **characterized in that**
the thermal conductivity of the base element (26, 44) increases in the downward direction from the interior and/or the linear expansion capability of the base element (26, 44) decreases in the downward direction from the interior starting from the uppermost layer (28, 45).

11. The container according to any of the preceding claims, **characterized in that**
at least one heating element is attached to the side of the base element facing away from the interior of the container, wherein preferably the heating element comprises a thick-layer heating element, an induction heating element or a heating element having at least one layer with carbon nanotube elements.

12. A method for producing a container according to any of the preceding claims,
**characterized in that**
each side wall (22, 24, 42) is produced by deep-drawing and/or bending,
an opening (53) is formed in the base region, in particular by cutting, milling or by means of a laser, the opening (53) being covered by the base element (26, 44), and
the base element (26, 44) is non-detachably joined to the side wall (22, 24, 42) by welding, in particular in a curved edge region (41).

13. The method according to claim 12, **characterized in that**
the welded join (34, 34', 51) is produced in a lower side facing away from the interior of the container (20, 40), in particular via material of the base element (26, 44).

14. The method according to claim 12 or 13, **characterized in that**
the cutout (50) and/or the welded join (34, 34', 51) is/are polished.

15. The method according to any of claims 12 to 14, **characterized in that**
a heated coating based on carbon nanotubes is applied to at least a portion of the base element (26, 44), preferably to at least a portion of the base element (26, 44) and of the base element taper (52) and/or the edge region (41) of the side wall (42).

16. The method according to claim 15, **characterized in that**
the heated coating is connected to a low voltage source, in particular a 12V/24V network.

17. The method according to claim 15 or 16, **characterized in that**
the heated coating is printed on in order to provide heating zones, in particular heating zones which can be actuated separately, preferably by leaving empty columns and/or lines.

## Revendications

1. Récipient (20, 40) ayant la forme d'un poêlon d'un dispositif de cuisson, destiné à contenir des aliments et/ou des fluides de transmission de chaleur dans un espace intérieur qui est délimité par au moins une paroi latérale (22, 24, 42) d'une épaisseur de matériau b et au moins un élément de fond (26, 44), dans lequel
l'élément de fond (26, 24) est fixé à demeure sur la paroi latérale (22, 24, 42) dans une zone périphérique (41) du récipient (20, 40) au moyen d'au moins une soudure (34, 34', 51), et présente hors de la zone périphérique (41) une épaisseur de matériau a telle que a > b, et **caractérisé en ce que** dans la zone de la soudure (34, 34', 51) avec la paroi latérale (22, 24, 42),
l'élément de fond (26, 44) présente une épaisseur de matériau b' qui correspond sensiblement à l'épaisseur de matériau b de la paroi latérale (22, 24, 42).

2. Récipient selon la revendication 1, **caractérisé en ce que**
l'élément de fond (26, 44) comporte au moins deux couches (28, 30, 32, 45, 46, 47), de telle sorte que la couche (28, 45) la plus supérieure dirigée vers l'intérieur du récipient (20, 40) s'étend jusqu'à la zone de la liaison (34, 34', 51), tandis que chaque autre couche (30, 32, 46, 47) ne s'étend pas jusqu'à la liaison (34, 34', 51), et/ou l'élément de fond (26, 44) présente un évidement (36, 36', 50) dans la zone périphérique (41), pour l'adaptation de l'épaisseur a de l'élément de fond (26, 44) à l'extérieur de la zone périphérique à l'épaisseur de matériau b' dans la zone de la liaison (34, 34', 51).

3. Récipient selon la revendication 2, **caractérisé en ce que** la couche supérieure (28) présente une épaisseur de matériau qui correspond sensiblement à celle de la paroi latérale (22, 24), et/ou
l'évidement (50) est au moins partiellement mis en forme pour fournir un chanfrein d'élément de fond (52), de préférence entre deux transitions radiales (48, 49).

4. Récipient selon la revendication 2 ou 3, **caractérisé en ce que**
la couche supérieure (45) est réalisée ayant une épaisseur de matériau b', qui correspond sensiblement à l'épaisseur de matériau b de la paroi latérale (42), sur une longueur b" de l'élément de fond (26, 44) seul, de sorte que de préférence b'= b".

5. Récipient selon la revendication 3 ou 4, **caractérisé en ce que**
l'angle α entre le chanfrein d'élément de fond (52) et le côté inférieur de la couche supérieure (45) dirigé à l'opposé de l'intérieur du récipient (20, 40) est > 90°, de préférence > 120 , et de manière plus préférée > 140° et <160°.

6. Récipient selon l'une quelconque des revendications précédentes, **caractérisé en ce que**
l'élément latéral (42) dans la zone périphérique (41) est incurvé, de telle sorte qu'une transition radiale (43) de l'élément latéral (42) s'étend de préférence jusqu'à la liaison (51).

7. Récipient selon l'une quelconque des revendications précédentes, **caractérisé en ce que**
la soudure, qui peut être réalisée en particulier sans métal d'apport de brasage, comporte un cordon de soudure, en particulier ayant une surface d'enveloppe conique de section plate et/ou est disposée sur le côté dirigé vers l'intérieur du récipient (20, 40).

8. Récipient selon l'une quelconque des revendications précédentes, **caractérisé en ce que**
l'élément de fond (26, 44) comprend trois couches (28, 30, 32, 45, 46, 47) et/ou au moins un élément chauffant ou au moins une partie d'un dispositif de chauffage par induction.

9. Récipient selon la revendication 8, **caractérisé en ce que**
la couche supérieure (45) est une couche en acier inoxydable, sur le côté inférieur, dirigé à l'opposé de l'intérieur, sur laquelle une couche d'acier(46) en acier est appliquée, tandis que sur le côté inférieur dirigé à l'opposé de l'intérieur de la couche d'acier (46) est appliquée une couche d'acier chromé (47).

10. Récipient selon l'une quelconque des revendications précédentes,
**caractérisé en ce que**
la conductivité thermique de l'élément de fond (26, 44) va augmenter depuis l'intérieur vers le bas et/ou la capacité de dilatation thermique linéaire de l'élément de fond (26, 44) de la couche supérieure (28, 45) va diminuer depuis l'intérieur vers le bas.

11. Récipient selon l'une quelconque des revendications précédentes,
**caractérisé en ce que**
sur le côté de l'élément de fond opposé à l'intérieur du récipient est agencé au moins un élément chauffant, de sorte que, de préférence, l'élément chauffant comporte un élément chauffant en film épais, un élément chauffant à induction ou un élément chauffant ayant au moins une couche de constituants de elements de nanotubes de carbone.

12. Procédé de fabrication d'un récipient selon l'une quelconque des revendications précédentes, **caractérisé en ce que** chaque paroi latérale (22, 24, 42) est produite par emboutissage profond et/ou cintrage,
dans la zone de fond va être agencée une ouverture (53) qui est réalisée, en particulier par une coupe, un fraisage ou une découpe au laser,
l'ouverture (53) de l'élément de fond (26, 44) est recouverte, et
l'élément de fond (26, 44) va être relié de manière fixe par soudure à la paroi latérale (22, 24, 42), en particulier dans une zone de périphérie cintrée (41).

13. Procédé selon la revendication 12, **caractérisé en ce que**
la soudure va être réalisée, dans un côté inférieur opposé à l'espace intérieur du récipient (20, 40), en particulier sur le matériau de l'élément de fond (26, 44).

14. Procédé de la revendication 12 ou 13, **caractérisé en ce que**
l'évidement (50) et/ou la soudure (34, 34', 51) et ou vont être polis.

15. Procédé selon l'une quelconque des revendications 12 à 14, **caractérisé en ce**
**qu'**un revêtement chauffant à base de nanotubes de carbone va être appliqué au moins sur une partie de l'élément de fond (26, 44), de préférence au moins sur une partie de l'élément de fond (26, 44) et le chanfrein d'élément de fond (52) et/ou la zone de périphérie (41) de la paroi latérale (42).

16. Procédé selon la revendication 15, **caractérisé en ce que**
le revêtement chauffant est relié à une source de basse tension, en particulier un réseau 12V/24V.

17. Procédé de la revendication 15 ou 16, **caractérisé en ce que**
le revêtement chauffant, pour la fourniture en particulier de zones de chauffage à commande séparée, va être imprimé de préférence, en laissant des colonnes et/ou des lignes.
